# EUROPEAN PATENT SPECIFICATION

(11) **EP 3 659 848 B1**
(45) Date of publication and mention of the grant of the patent: **13.10.2021**
(21) Application number: 19210548.4
(22) Date of filing: 21.11.2019
(51) Int. Cl.: B60K 35/00, B60K 37/06

(54) **OPERATING MODULE, OPERATING METHOD, OPERATING SYSTEM AND STORAGE MEDIUM FOR VEHICLES**
BETRIEBSMODUL, BETRIEBSVERFAHREN, BETRIEBSSYSTEM UND SPEICHERMEDIUM FÜR FAHRZEUGE
MODULE DE FONCTIONNEMENT, PROCÉDÉ D'EXPLOITATION, SYSTÈME D'EXPLOITATION ET SUPPORT D'ENREGISTREMENT POUR VÉHICULES

(30) Priority: 28.11.2018 CN 201811433256
(43) Date of publication of application: 03.06.2020
(73) Proprietor: Bayerische Motoren Werke Aktiengesellschaft, 80809 München (DE)
(72) Inventor: Baier, Kai, Beijing, 101318 (CN); Veddeler, Jens, Peking, 100027 (CN)

(56) References cited:
- DE-A1-102008 042 844
- DE-A1-102016 002 022
- US-A1- 2015 295 993
- US-A1- 2017 064 516

## Description

### TECHNICAL FIELD

The present invention relates to a operating module for a vehicle, a method for operating in a vehicle, a computer readable storage media, and an operating system for a vehicle.

### BACKGROUND ART

In conventional vehicles, Rotation-and-Press means or Scroll-and-Press means are typically provided for operating or inputting. However, such an operation is ineffective and inconvenient, and the objects of operation are also relatively limited. Therefore, human-computer interaction inside the vehicle needs further improvement nowadays.

Especially in autonomous vehicles, drivers may usually not take over the driving task at all times, and thus do not have to keep the driving posture. In this case, use of common operating means may be detrimental to the drivers' comfort.

US 2015295993 A1 relates to a method and apparatus for interacting with a personal computing device such as a smart phone using portable, self-contained hardware that is adapted for use in a motor vehicle. The apparatus includes a user interface designed to receive user input, including tactile user input, from the occupant of the motor vehicle, an electronic interface, electrically coupled to the user interface and removably connectable to the personal computing device.

DE 102016002022 A1 relates to a portable operating device for controlling a display device of a motor vehicle, having a housing, a control device which is set up to carry out the method steps of a method according to the invention relating to the control device, a communication device for wireless communication with a communication device of the motor vehicle and an energy store.

US 2017064516 A1 discloses an in-vehicle component which can identify a personal device associated with the zone of the in-vehicle component by identifying a personal device associated with the zone of the in-vehicle component by determining average signal strength between the personal device and the in-vehicle components of each zone, and identifying for which zone the average signal strength is highest, and sending a notification to the personal device responsive to a detected user interaction.

DE 102008042844 A1 discloses a fastening medium, which allows a fastening at a component belonging to an interior of the motor vehicle. A control unit is arranged in a control position in the straight ahead view field of a user, particularly a driver.

### CONTENT OF THE DISCLOSURE

An object of the present invention is to provide an improved operating module, an operating method, an operating system and a storage medium for a vehicle that facilitate operation of a driver in the vehicle and improve operational comfort.

In order to achieve the above object, according to the invention, an operating module for a vehicle is provided, wherein the operating module is detachably connected to a steering wheel and communicably connected to the vehicle, the operating module is used for input of instructions and/or information, and the operating module is provided with means for spatial orientation to determine the position and direction of the operating module within the vehicle.

Whether in a conventional vehicle or in an autonomous vehicle, the steering wheel is always a mandatory component of the vehicle. The present invention provides an operating module for a vehicle that is detachably connected to the steering wheel. That is to say, the operating module according to the present invention may be in a state in which it is integrated with the steering wheel and in a state in which it is separated from the steering wheel. An easy transfer between the integrated state and the separated state may be achieved by means of detachable connection.

In the integrated state, the operating module may be connected to the steering wheel by form fit, force fit and/or shape fit, and the operating module may be located at a position on the steering wheel that is easily accessible to a hand, in particular at a position close to or directly grabbed by the hand when the hand is grabbing the steering wheel. In this way, the driver can easily operate the vehicle, particularly an onboard infotainment device, a navigation device and the like without distracting from the driving.

In the separated state, the operating module is spatially separated from the steering wheel. As a result, the user no longer has to be kept in a driving posture. This is particularly advantageous in autonomous drive, as the user may be in a comfortable or relaxed posture and/or at any position within the vehicle, for example, moving and/or leaning backwards slightly away from the position of the steering wheel, or even lying on a flattened seat; sitting on a passenger seat in the vehicle; facing away from the traveling direction of the vehicle, etc. At this time, the user of the operating module is not limited to the driver, and other passengers may also use the operating module. In the sense of the present invention, the user of the operating module may be the driver, a passenger sitting at the co-driver position, a passenger sitting in the rear of the vehicle, and the like.

The operating module is used for input of instructions and/or information. Instructions such as a turn-on/-off instruction, a switch instruction, a tune-up instruction, a tune-down instruction, a move instruction, a slide instruction, a scroll instruction, a confirm instruction, a return instruction, and the like, may be input by the operating module according to the present invention. As such, information such as text information, orientation information, voice information, and graphic information, and the like, may also be input.

In order to transmit the above instructions and/or information to the vehicle, the operating module is communicably connected to the vehicle to transmit the user's operation on the operating module to the vehicle. Here, the communicable connection may be implemented in a wired or wireless manner. The wired connection involves, for example, vehicle buses, such as Local Interconnect Network (LIN) buses, controller area network (CAN) buses, or FlexRay buses, etc. The wireless connection may be a wireless connection in terms of the following standards, for example, WLAN according to IEEE 802.11a, IEEE 802.11b, IEEE 802.11ac, IEEE 802.11ad, IEEE 802.11g, IEEE 802.11h, IEEE 802.11n, or Bluetooth, especially Bluetooth V2. 0, Bluetooth V3.0, Bluetooth V4.0 or the like.

According to the invention, the operating module is provided with means for spatial orientation to determine the position and direction of the operating module within the vehicle. Here, it particularly allows for determination of the position and direction of the operating module within the vehicle in the state where the operating module is separated from the steering wheel. In this way, specific operations may be performed depending on the position and direction of the operating module within the vehicle.

According to the present invention, on the one hand, a pointing direction of the operating module may be detected by determining its position and direction, and operation may be performed to a vehicle component directed by the operating module or to a specific region of the vehicle component. For example, when the user points the operating module to an air conditioner and/or a ventilation device in the vehicle (e.g. a ventilation grille beside the vehicle dashboard), the operating module may perform operation, for example, turning on/off, adjusting temperature, adjusting ventilation rate, etc., on the air conditioner and/or the ventilation device. When the operating module is directed to a seat in the vehicle, the operating module may perform operation, such as moving forward, moving backward, adjusting the backrest angle, etc., on the seat. Not limited to this, the means for spatial orientation may also detect whether the operating module is in a state in which it is integrated with the steering wheel. If having detected that the operating module is in a state in which it is integrated with the steering wheel, the operating module may, for example, return to its basic operating mode.

On the other hand, it is also possible to operate the vehicle in accordance with a position change of the operating module in space, that is, in accordance with the moving process of the user's hand holding the operating module. Here, a concept of gestures may be used, for example, the user shaking the operating module up and down, shaking the operating module laterally, hand-holding the operating module to draw a semicircle in space, etc. The gesture operation described herein may be used as a quick activation mode for vehicle functions. For example, if the operating module is shaken up and down twice, the vehicle headlights are turned on; if the operating module is hand-held to draw a semicircle, the wiper is turned on; if the operating module is shaken twice in a longitudinal direction of the vehicle, the sliding sunroof is opened.

Here, the direction of the operating module refers in particular to a linear direction, to which a front end of the operating module is directed, or a direction in which the longitudinal dimension of the operating module extends. Depending on the position and direction or the moving trajectory of the operating module within the vehicle, the direction to which the user points by means of the operating module can be acquired, and in conjunction with the known layout of the various components and their regions of the vehicle, the vehicle component desired to be operated by the user can be known.

The vehicle components mentioned above may be, for example, a head-up display, an AR (augmented reality) windshield, a dashboard display, a center console display, a backview display, a speaker, an air conditioner and/or a ventilation device, a radio, an infotainment device, a navigation device, a sliding sunroof device, a seat adjustment device, an EPS device, a start-stop device, a parking device, a vehicle lighting device, a driving mode switching device, a window heating device, a rearview mirror heating device and a rearview mirror adjusting device. By the present invention, targeted operations can be performed to the vehicle components easily. The user can operate various components of the vehicle similarly to household appliances such as televisions, air conditioners and the like that are operated daily. Thus, the user can select easily the vehicle component to be operated only by simply turning his wrist. In contrast, the same operation would be complicated and cumbersome if conventional input means such as Scroll-and-Press means, Rotation-and-Press means, or touch screen menus are used.

The operation device according to the present invention exhibits a significant advantage when the vehicle is equipped with a head-up display, in particular a head-up display covering substantially the entire windshield or an AR windshield, since it is difficult for the driver and/or passenger to reach the head-up display or the AR windshield. Moreover, given its relatively large area, it is difficult for the user to perform specific intuitive operations on it.

In addition, according to the development trend of the vehicle in future, more and more vehicles will be equipped with backview displays on the rear windows of the vehicles. The backview display presents display content on the rear window in a similar way as the head-up display or the AR windshield so as to provide driving and entertainment information for the driver and the passenger.

Here, it is particularly also possible for the user to acquire the specific region of the vehicle component desired to be operated. The operating module according to the present invention is particularly advantageous in the case of a head-up display covering almost the entire windshield, an AR windshield or a backview display covering almost the rear window, as the head-up and/or backview displays or the AR windshield have lots of display contents and are large in size span. With conventional operation devices, it is necessary to jump between individual sub-contents (such as navigation areas, driving information areas, entertainment areas, social networking areas) or objects and/or to move the cursor over the entire screen range. However, according to the present invention, it is possible to quickly jump to a specific region of the vehicle component to be operated by an easy operation of the user, i.e. changing the direction, to which the operating module is pointed. This speed of operation is beyond the reach of conventional input means.

Here, the operating module according to the present invention functions like a laser pointer. The user makes the end or longitudinal extension of the operating module point the vehicle component or region thereof desired to be operated. Alternatively, in order to provide a more intuitive effect for the user, the operating module may be allowed to emit a laser beam indicating its direction, or a moving cursor may be displayed on a vehicle component, in particular on a screen. In this way, the user can intuitively adjust the pointing direction of the operating module so as to operate in a more accurate way.

Moreover, according to the present invention, it is also possible to control intuitively and efficiently a plurality of components of the vehicle using the same operating module(s). This firstly improves the integration of the operation/input means, and may also obviate the use of various operating panels and operating buttons for the vehicle components, thereby simplifying and gracing the onboard decorations.

Specific implementations of the means for spatial orientation are described in detail below.

According to the present invention, the position and direction of the operating module within the vehicle may be detected by different technologies. Here, for example, Outside-in Tracking and Inside-out Tracking in VR technology may be advantageously utilized.

According to the invention, the means for spatial orientation is configured as a photosensitive sensor for receiving laser light emitted from at least two laser base stations disposed inside the vehicle. Here, the vehicle is provided with at least two laser base stations which continuously scan the interior space of the vehicle in horizontal and vertical directions, respectively. The photosensitive sensor as the means for spatial orientation receives a laser signal emitted from the at least two laser base stations. Each photosensitive sensor measures the duration for which horizontal laser light and vertical laser light reaches the photosensitive sensor respectively, and accordingly can calculate the angle and distance of the photosensitive sensor with respect to the base stations in the horizontal and vertical directions. In the integrated state or the attached mode, the lasers might go in a standby state to reduce energy consumption. Further, in conjunction with the known positional difference between the at least two photosensitive sensors, the position and direction as well as the moving trajectory of the operating module within the vehicle can be derived. Here, the two laser base stations may be disposed at the upper left corner and the upper right corner of a front windshield respectively. In order to prevent the laser light from being blocked by front passengers or seats, the laser base stations may also be mounted on the upper ends of two B-pillars in the vehicle, or at the upper left corner and upper right corner of a rear windshield, respectively.

According to this embodiment, high positioning accuracy can be achieved based on laser light. Further, since image analysis is not required, there is low demand for computing capability. Moreover, the operating module may be constructed therein with computing means for calculating its position and direction so as to figure out its spatial information by direct and rapid analysis. As a result, the amount of data transmitted is small upon communication with the vehicle, and the delay of the operation is very low as well. In addition, the vehicle body itself provides a good location for installing of the laser base stations. The technology of Outside-in Tracking is utilized herein.

According to a further embodiment of the present invention, the means for spatial orientation is configured as an illuminator for providing an optical signal for a camera disposed inside the vehicle. The illuminator is an infrared light emitter, while the camera is an infrared light camera; or the illuminator is a visible light emitter, while the camera is a visible light camera.

Here, the illuminator and the camera form an optical tracking system, wherein the illuminator is mounted on the operating module being tracked, whereas the camera for acquiring a light source signal is fixed in the vehicle, based on the principle of triangulation algorithm. Here, position tracking of a target is achieved by measuring the light actively emitted from the illuminator and converting it into spatial position data of the target through a computer visual algorithm. Here, at least two cameras may be provided according to multi vision positioning, and alternatively one camera may also be provided depending on the monocular vision positioning. The illuminator is an infrared light emitter, while correspondingly the camera is an infrared light camera. Alternatively, the illuminator is a visible light emitter, while the camera is a visible light camera. Furthermore, in order to orient the operating module more precisely, at least two illuminators and/or illumination regions not in point symmetry may be provided. In order to prevent the operation from being affected by a variation in external light, positioning and orientating is preferably achieved by means of infrared rays.

The camera may preferably also be mounted on a wearable device of the user. Here, the technology of Inside-out Tracking is utilized. However, the camera may also be mounted on the vehicle body, for example, being integrally assembled with a rearview mirror in the vehicle.

By this embodiment of the present invention, the operating module can be manufactured at low cost. Here, the operating module does not need to calculate its spatial position, thus eliminating its requirements for calculation. Here, graphical analysis with high requirements for calculating capacity is accomplished by a high-performance onboard computer.

According to a particularly simple embodiment, the means for spatial orientation is configured as a mark point for providing position information for a camera disposed inside the vehicle. Here, the mark point is used as a substitute for the above-mentioned illuminator. In particular, the mark point is covered with a reflective material and/or has a special graphic structure or color. In order to achieve accurate positioning, the number of the mark points may be at least two. Like the previous embodiment, the operating module can be manufactured or adapted at a lower cost. Here, the operating module does not need to calculate its spatial position, thus eliminating its requirements for calculation. Moreover, there is no need to install an illuminator for the operating module.

The means for spatial orientation, such as the photosensitive sensors, the illuminators or the mark points, may be integrated onto the existing movable operation and/or input means or attached to external components of the vehicle. This allows for the use of existing operation and/or input means with only minor modifications. More advantageously, it is also possible to use a device that is not attached to the vehicle, i.e. a vehicle external device, for operation, wherein the vehicle external device is equipped with the means for spatial orientation, in particular the illuminator or the mark pint, and may communicate with the vehicle. The vehicle external device is advantageously in detachable connection to the steering wheel by a receptacle provided on the steering wheel.

According to an embodiment, the movable operating and/or inputting means as the operating module may be a remote control key of the vehicle. As a remote control key that can communicate with the vehicle, it is provided, according to the present disclosure, with a special receptacle on the steering wheel of the vehicle, through which the remote control key may be detachably connected to the steering wheel. Further, the remote control key is provided with means for spatial orientation to determine its position and direction within the vehicle.

According to another embodiment, the vehicle external device as the operating module may be a mobile communication device, including for example, a cellular phone, a personal device assistant (PDA), a smart phone, a tablet computer, a smart watch, or other devices that have a processor and communicating capacities and are easy to be handheld. The vehicle external device is provided with a communication unit, a memory unit device, and a processor, and includes a corresponding App integrated in the operating system or stored in the memory/storage area and executed by the processor for operating the vehicle.

Further, in order to improve the accuracy of positioning and/or orientation, the operating module may also be integrated with a motion sensor such as a speed sensor, a gyroscope, an acceleration sensor, a steering angle sensor and the like. In this way, it allows, on the one hand, the operating module to be further orientated and positioned in the case of being blocked, and on the other hand, can compensate for the positioning deviation caused by movement of the vehicle.

According to an embodiment of the present invention, the operating module has a touch-sensitive surface for inputting. Here, the touch-sensitive surface may be configured as a touch panel, which can detect a location, movement, tapping and other actions of one or more fingers of the user on the touch panel. Here, operation may be performed similarly to a touch panel that is typically assigned to a notebook computer, for example, controlling the direction of a cursor by movement of a finger, making a confirmation by tapping the touch panel, scaling by adjusting the distance between two fingers, turning pages in up-and-down or left-and-right direction by simultaneous movement of three fingers, etc. Here, the user can operate the vehicle, in particular the head-up display or the AR windshield, in the manner he is accustomed to.

According to an embodiment of the present invention, on the operating module is provided a display device, which is arranged separately from or integrally with the touch-sensitive surface. Here, the display device may display operational options such as icons and/or menus of operable functions/programs, parameters of current functions/programs, dialog boxes, function buttons, keyboard layout, and the like. It is particularly advantageous that the display device is integrated with the touch-sensitive surface, that is to say, the operating module has a touch screen. At this time, the operating module may be operated like a smart phone, thus making it possible for the user to carry out intuitive operation. Moreover, advantageously, the display device provides feedback for the user's operation.

According to the present invention, the display content of the display device provided on the operating module is adapted depending on the vehicle component directed by the operating module. For example, in the case of the operating module being detached from the steering wheel, when the operating module is directed to the air conditioner, the adjustable parameters of the air conditioner, such as air volume, temperature, mode, etc., are displayed on the display device correspondingly. The user may operate the air conditioner according to the display content. When the operating module is directed to a social networking program area on the head-up display or the AR windshield, a keyboard layout, such as QWERTY keyboard layout, may be displayed on the display device. The user may input letters, characters and the like by tapping the letters on the keyboard layout. When there are a plurality of, in particular two operating modules, a portion of the keyboard layout may be displayed on each of the display devices.

Further, in the case where the operating module is a vehicle external device, in particular a smart phone, the touch screen of the smart phone may be advantageously utilized. An App for operating the vehicle may be installed on the smart phone, and the vehicle may be operated through the graphical interface of this App. In this way, the vehicle can be operated in a manner that the user is accustomed to.

According to an embodiment of the present invention, the operating module has a battery, which may be charged in a state where the operation device is connected to the steering wheel. Here, charging may be performed by a charging wire or a contact that is physically connected to the steering wheel, or in a wireless manner by induction of electromagnetic field.

According to an embodiment of the present invention, the operating module is provided with a physical button. Preferably, the operating module is woken up or closed by the physical button. Further, confirmation and/or return operations may be performed by the physical button.

According to an embodiment of the present invention, the operating module may also be provided with a speaker and/or a microphone for sound playback and/or voice input. According to an embodiment of the present invention, the operating module is connected to a reset mechanism provided on the steering wheel so as to be reset to a state where it is connected to the steering wheel. At present, in the mode of autonomous drive, driver intervention is still required in some cases, especially in emergencies. In order to prompt or guide the driver to return to the driving posture in time, the operating module is connected to the reset mechanism. Here, the reset mechanism may be a cord, which may be unwound from a spool for elongation in the case where the operating module is detached from the steering wheel, and which is forced to be re-wound onto the spool for retraction upon resetting. In this way, the users, in particular the drivers, can have their two hands guided to the vicinity of the steering wheel, so that they can quickly return to the driving state, thereby achieving the driving safety in autonomous driving. Here, the cord may be constructed as a cable for wired communication and/or charging cable mentioned above.

According to another aspect of the present invention, a method for operating in a vehicle is involved, wherein instructions and/or information are input using the operating module for a vehicle as described in the above embodiments. According to the present disclosure, as the operating module may be integrated with the steering wheel, the driver may not distract from the traffic. Further, as the operating module may be spatially separated from the steering wheel, the user, particularly the driver, can be in a comfortable or relaxed posture and/or at any position within the vehicle.

According to the present invention, the remote control key of the vehicle may be used as the operating module. Further, the user's mobile communication device may also be used as the operating module. The remote control key of the vehicle and the mobile communication device have means for spatial orientation.

Particularly in a state where the operating module is detached from the steering wheel, the vehicle component directed by the operating module is operated remotely according to the position and direction of the operating module within the vehicle. Thus, a convenient and comfortable means of operation inside the vehicle is provided.

According to another aspect of the present invention, a computer readable storage medium is involved, having an executable instruction which, when executed, prompt a computer to perform the method according to the present invention.

According to another aspect of the present invention, an operating system for a vehicle is involved. The operating system comprises: an operating module for the vehicle as described in the present disclosure; a spatial orientation device for cooperating with the means for spatial orientation of the operating module to determine the position and direction of the operating module within the vehicle; a communication device for receiving instructions and/or information inputted on the operating module; a control device which generates a control signal according to the inputted instructions and/or information in conjunction with the position and direction of the operating module within the vehicle.

According to an embodiment of the present invention, the control signal is provided to control a vehicle component.

According to an embodiment of the present invention, the vehicle component comprises: a head-up display, an AR windshield, a dashboard display, a center console display, a backview display, a speaker, an air conditioner and/or a ventilation device, a radio, an infotainment device, a navigation device, a sliding sunroof device, a seat adjustment device, an EPS device, a start-stop device, a parking device, a vehicle lighting device, a driving mode switching device, a window heating device, a rearview mirror heating device, and a rearview mirror adjusting device.

### BRIEF DESCRIPTION OF THE DRAWINGS

FIG. 1 shows a state in which an operating module for a vehicle is integrated with a steering wheel according to the present invention;
FIG. 2 shows a state in which the operating module for a vehicle is detached from the steering wheel according to the present invention;
FIG. 3 shows an overview of the front portion inside the vehicle;
FIG. 4 shows a block diagram of an operating system for a vehicle;
FIG. 5 is a schematic view showing the operation of an air conditioner using the operating module for a vehicle according to the invention;
FIG. 6 illustrates an example of gesture control performed in a vehicle using the operating module for a vehicle;
FIG. 7 illustrates another example of gesture control performed in a vehicle using the operating module for a vehicle;
FIG. 8 is a schematic view showing a case where the operating module for a vehicle is subjected to a keyboard operation.

### EMBODIMENTS

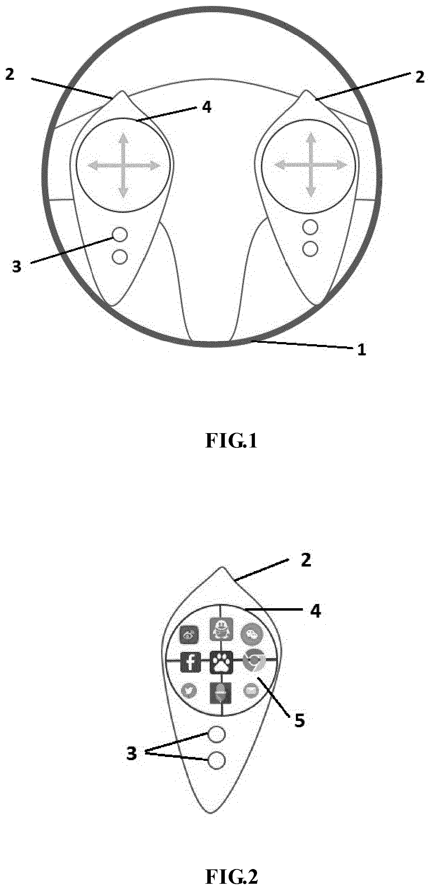

FIG. 1 shows a steering wheel 1 for a vehicle, on which two operating modules 2 for a vehicle according to the invention are provided. Here is shown a state in which the operating module 2 for a vehicle is integrated with the steering wheel 1. However, the operating module 2 is detachably connected to the steering wheel 1 and communicably connected to the vehicle, and is used for input of instruction and/or information. According to the invention, the operating module 2 is provided with means for spatial orientation to determine the position and direction of the operating module within the vehicle.

The means for spatial orientation (not shown) of the operating module 2 determines the position and direction of the operating module within the vehicle. Accordingly, specific operations can be performed depending on the position and direction of the operating module within the vehicle.

The means for spatial orientation may be configured as a photosensitive sensor (not shown) disposed on a surface of the operating module 2 for receiving laser light emitted from at least two laser base stations positioned inside the vehicle. The means for spatial orientation may be configured as an illuminator (not shown) for providing an optical signal for a camera positioned inside the vehicle, wherein the illuminator is an infrared light emitter, while the camera is an infrared light camera; or the illuminator is a visible light emitter, while the camera is a visible light camera. Further, the means for spatial orientation may also be configured as a mark point (not shown) for providing position information for a camera positioned inside the vehicle.

FIG. 1 shows the state in which the operating module 2 is integrated with the steering wheel 1, wherein the operating module 2 may be at a position on the steering wheel 1 that is easily accessible by a hand. In this way, the driver can operate the vehicle easily through the operating module 2 without distracting from the driving.

As shown in FIG. 1, the operating modules 2 are each provided with two physical buttons 3, which are preferably used to wake up the operating module, close the operating module, make a confirmation and/or return.

Further, each of the operating modules 2 is provided with a touch-sensitive surface 4, which is configured as a touch panel here for detecting a location, movement, tapping and other actions of one or more fingers of the user on the touch panel.

FIG. 2 shows a state in which the operating module 2 for a vehicle is detached from the steering wheel 1 according to the present disclosure. In this case, the operating module 2 is disengaged from the steering wheel 1, and may be located at any position within the vehicle. The user can operate the operating module 2 in a comfortable and free manner by holding it with hand.

The operating module 2 is provided with a display device 5 for displaying operational options such as icons and/or menus of operable functions/programs, parameters of current functions/programs, function button icons, keyboard layouts and the like. As shown in FIG. 2, the display device 5 is disposed integrally with the touch-sensitive surface 4. The interface shown here may be implemented similarly to a smart phone. An icon of each App that the operating module 2 can operate is displayed on the display device 5. The user may tap the icon on the display device 5 with a finger to activate the corresponding program. The user may also press the physical button 3 to wake up the operating module, close the operating module, make a confirmation and/or return.

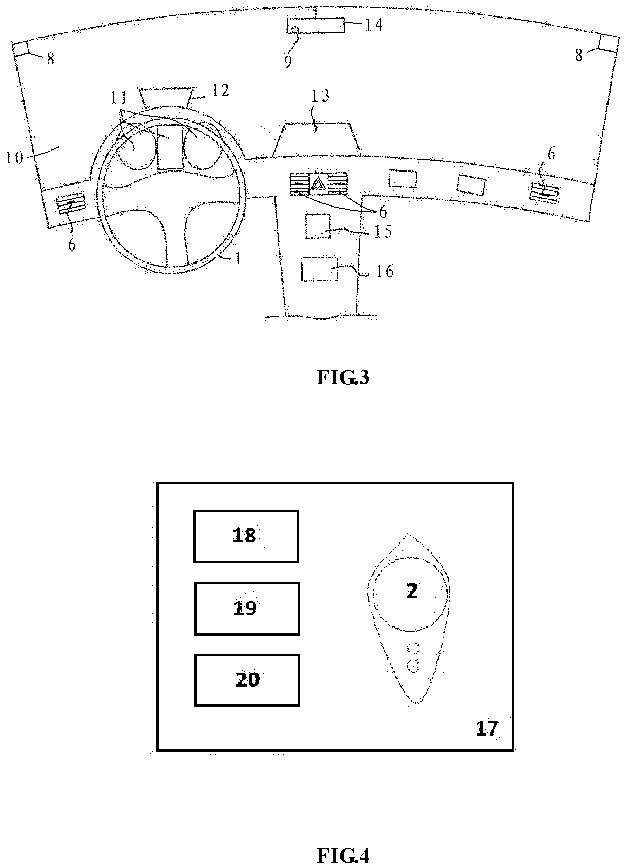

FIG. 3 which is a schematic view showing part of the vehicle components, shows an overview of the front portion inside the vehicle. Behind the steering wheel 1 is provided dashboard displays 11, which typically display information such as rotation speed of an engine, vehicle speed, water temperature, mileage, amount of fuel remaining, and the like. Behind the dashboard displays 11, a local head-up display 12 is provided, which typically displays important information for driving, such as current vehicle speed, next action and distance on the navigation route. The entire windshield of the vehicle is integrated with a panoramic head-up display 10 or an AR windshield, which may display vehicle operating menus, navigation maps, other traffic participants displayed by Augmented Reality (AR) technology, App (such as social networking software) interfaces, settings of the vehicle components, etc. It is also possible to provide a center console display above the center console, which may also display the vehicle operating menus, the navigation maps, the settings of the vehicle components and the like. The center console may also be provided with a radio/music playback device 15 and a navigation device 16. As shown in the figure, a plurality of grilles 6 for the air conditioner/ventilation devices may be provided. An in-vehicle rearview mirror 14 is provided in the upper middle portion of the windshield.

As shown in FIG.4, an operating system 17 for a vehicle according to the present disclosure includes the above-described operating module 2, and a spatial orientation device 18, a communication device 19 and a control device 20 disposed in the vehicle, wherein the spatial orientation device 18 is used for cooperating with the means for spatial orientation of the operating module 2 to determine the position and direction of the operating module 2 within the vehicle, the communication device 19 is used for receiving the instructions and/or information inputted on the operating module 2, and the control device 20 generates a control signal according to the inputted instructions and/or information in conjunction with the position and direction of the operating module 2 within the vehicle.

Here, different implementations of the spatial orientation device 18 are specifically illustrated by means of FIG.4.

As described above, the means for spatial orientation of the operating module 2 may be configured as a photosensitive sensor, the spatial orientation device 18 may be configured as laser base stations 8, and the photosensitive sensor is used for receiving laser light emitted from the laser base stations 8 positioned inside the vehicle. As shown in FIG. 4, the upper left corner and the upper right corner of the windshield may each be provided with one laser base station 8, which continuously scans the interior space of the vehicle in horizontal and vertical directions, respectively, such that the photosensitive sensor as the means for spatial orientation of the operating module 2 receives the laser signal emitted from the two laser base stations. Further, in order to be prevented from being blocked by the front passenger or seat, the laser base stations may also be mounted on the upper ends of two B-pillars in the vehicle, or at the upper left corner and upper right corner of a rear windshield, respectively.

Further, as described above, the means for spatial orientation of the operating module 2 may also be configured as an illuminator, the spatial orientation device 18 may be configured as a camera 9, and the illuminator is used to provide an optical signal for the camera disposed in the in-vehicle rearview mirror. Here, the light actively emitted from the illuminator is measured and converted into the spatial position data of a target through a computer visual algorithm, based on the principle of triangulation algorithm. Here, the camera 9 may be a monocular camera or a binocular camera. When the illuminator of the operating module 2 is an infrared light emitter, the camera 9 is an infrared light camera. When the illuminator of the operating module 2 is a visible light emitter, the camera 9 is a visible light camera.

Further, the means for spatial orientation of the operating module 2 may be configured as a mark point. At this time, the camera 9 constituting the spatial orientation device 18 and provided in the in-vehicle rearview mirror detects the mark point.

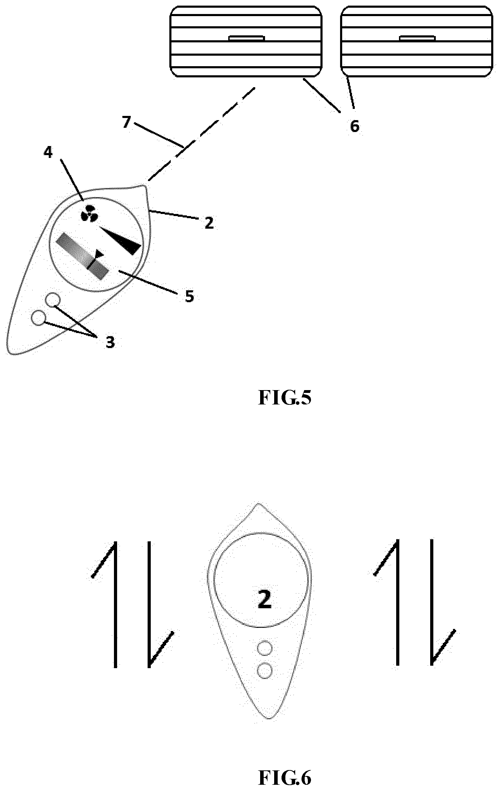

FIG. 5 is a schematic view showing the operation of an air conditioner using the operating module for a vehicle according to the present disclosure.

By cooperation of the means for spatial orientation of the operating module 2 with the spatial orientation device 18 in the operating system 17 for a vehicle, the position and direction of the operating module 2 within the vehicle can be determined and its pointing direction can be detected. Operation may be performed to the vehicle component directed by the operating module or to a specific region of the vehicle component. As shown in FIG. 5, the operating module 2 is directed to a ventilation grille 6 of the air conditioner/ventilation device in the vehicle. The imaginary pointing direction of the operation module 2 is indicated by a broken line 7 in FIG. 5. At this time, the operating module 2 may perform operation on the air conditioner and/or the ventilation device. In particular, the display content of the display device 5 provided on the operating module 2 is adapted in accordance with the air conditioner/ventilation device directed by the operating module, wherein the display device 5 displays an image representation of the current air volume and the set temperature. The user may input instructions to the air conditioner/ventilation device using the touch-sensitive surface 4 and/or the physical button 3 according to the content on the display device 5.

In addition to be based on the pointing direction of the operation module 2, it is also possible to input instructions into the vehicle by detecting a position change of the operating module 2 in space, i.e. the movement process of the user's hand holding the operating module (i.e. gesture control).

FIG. 6 illustrates an example of gesture control performed in a vehicle using the operating module for a vehicle. The two pairs of up and down arrows in the figure indicate that the operating module 2 is shaken up and down twice. Such movement of the operating module 2 is determined by cooperation of the means for spatial orientation of the operating module 2 with the spatial orienting device 18. According to a preset, shaking the operating module 2 up and down twice may be used, for example, to turn on the vehicle headlights.

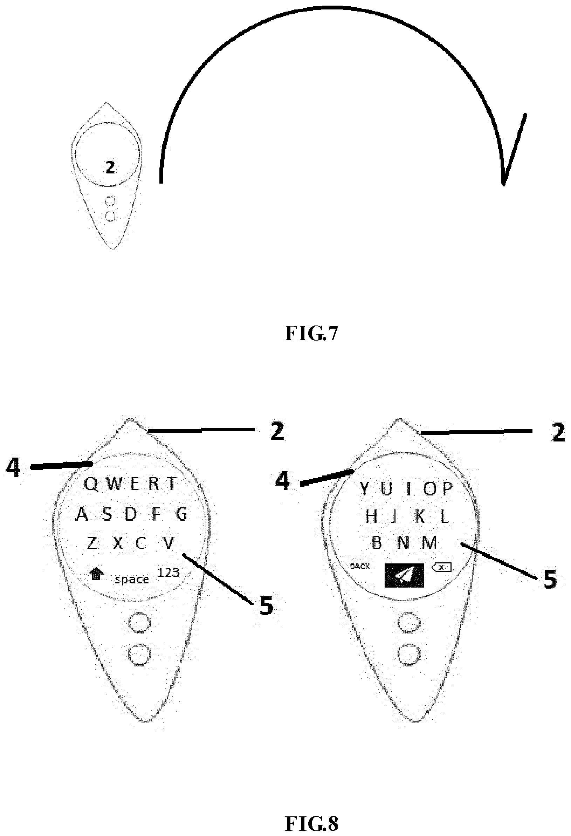

FIG. 7 illustrates another example of gesture control performed in a vehicle using the operating module for a vehicle. The semicircle in the figure indicates that a semicircle is drawn in space by hand-holding the operating module 2. Such movement of the operating module 2 is determined by cooperation of the means for spatial orientation of the operating module 2 with the spatial orienting device 18. According to a preset, hand-holding the operating module 2 to draw a semicircle may, for example, turn on the wiper.

FIG. 8 is a schematic view showing a case where the operating module 2 for a vehicle is subjected to keyboard operation for input of information. A QWERTY keyboard layout is displayed on the display device 5 of the operating module 2. As shown, a half of the QWERTY keyboard layout is displayed on each of the two operating modules 2. The user may tap a corresponding position of the touch-sensitive surface 4 on the operating module according to the display content of the display device 5 to input the desired letter. The embodiment shown in FIG. 8 is particularly suitable for the instance where the user uses one operating module 2 for each hand, thereby improving the efficiency of information input.

The present invention may also be a computer program product. The computer program product may comprise a computer readable storage medium having computer readable program instructions thereon for causing a processor to perform various aspects of the present disclosure.

## Claims

1. An operating module (2) for a vehicle, wherein the operating module (2) is detachably connected to a steering wheel (1) and communicably connected to the vehicle, wherein the operating module (2) is used for input of instructions and/or information, **characterized in that**, the operating module (2) is provided with means for spatial orientation to determine the position and direction of the operating module (2) within the vehicle; wherein the means for spatial orientation is configured as:
- a photosensitive sensor for receiving laser light emitted from at least two laser base stations positioned inside the vehicle, or
- an illuminator for providing an optical signal for a camera positioned inside the vehicle.

2. The operating module (2) according to claim 1, **characterized in that**, the illuminator is an infrared light emitter, while the camera is an infrared light camera; or the illuminator is a visible light emitter, while the camera is a visible light camera.

3. The operating module (2) according to claim 1, **characterized in that**, the means for spatial orientation is configured as a mark point for providing position information for a camera positioned inside the vehicle.

4. The operating module (2) according to any one of claims 1 to 3, **characterized in that**, the operating module (2) has a touch-sensitive surface for inputting.

5. The operating module (2) according to claim 4, **characterized in that**, on the operating module (2) is provided a display device (5), which is arranged separately from or integrally with the touch-sensitive surface.

6. The operating module (2) according to any one of claims 1 to 5, **characterized in that**, the operating module (2) has a battery, which is capable of being charged in a state where the operating module (2) is connected to the steering wheel (1).

7. The operating module (2) according to any one of claims 1 to 6, **characterized in that**, the operating module (2) is provided with a physical button.

8. The operating module (2) according to any one of claims 1 to 7, **characterized in that**, the operating module (2) is connected to a reset mechanism provided on the steering wheel (1) so as to be reset to a state where it is connected to the steering wheel (1).

9. A method for operating in a vehicle, wherein instructions and/or information are input using an operating module (2) for a vehicle according to any one of claims 1 to 8.

10. The method according to claim 9, **characterized in that**, in a state where the operating module (2) is detached from the steering wheel (1), a vehicle component directed by the operating module (2) is remotely operated according to the position and direction of the operating module (2) within the vehicle.

11. The method according to claim 10, **characterized in that**, a display content of the display device (5) provided on the operating module (2) is adapted depending on the vehicle component directed by the operating module (2).

12. A computer readable storage medium having executable instructions which, when executed, prompt a computer to perform the method according to one of claims 9 to 11.

13. An operating system for a vehicle, comprising:
an operating module (2) for a vehicle according to any one of claims 1 to 8;
a spatial orientation device (18) for interaction with a means for spatial orientation of the operating module (2) to determine the position and direction of the operating module (2) within the vehicle;
a communication device for receiving the instruction and/or information inputted on the operating module (2); and
a control device which generates a control signal according to the inputted instructions and/or information in conjunction with the position and direction of the operating module (2) within the vehicle.

14. The operating system according to claim 13, **characterized in that**, the control signal is provided to control vehicle components.

15. The operating system according to claim 14, **characterized in that**, the vehicle components comprise: a head-up display (12), an AR windshield, a dashboard display (11), a center console display, a backview display, a speaker, an air conditioner and/or a ventilation device, a radio, an infotainment device, a navigation device (16), a sliding sunroof device, a seat adjustment device, an EPS device, a start-stop device, a parking device, a vehicle lighting device, a driving mode switching device, a window heating device, a rearview mirror heating device, and a rearview mirror adjusting device.

## Patentansprüche

1. Betriebsmodul (2) für ein Fahrzeug, wobei das Betriebsmodul (2) lösbar mit einem Lenkrad (1) verbunden und kommunizierbar mit dem Fahrzeug verbunden ist, wobei das Betriebsmodul (2) verwendet wird zum Eingeben von Anweisungen und/oder Informationen, **dadurch gekennzeichnet, dass** das Betriebsmodul (2) mit einem Mittel zur räumlichen Orientierung versehen ist, um die Position und Richtung des Betriebsmoduls (2) innerhalb des Fahrzeugs zu bestimmen;
wobei das Mittel zur räumlichen Orientierung ausgelegt ist als:
- ein lichtempfindlicher Sensor zum Empfangen von Laserlicht, das von mindestens zwei Laserbasisstationen emittiert wird, die im Inneren des Fahrzeugs positioniert sind, oder
- ein Beleuchter zum Bereitstellen eines optischen Signals für eine im Inneren des Fahrzeugs positionierte Kamera.

2. Betriebsmodul (2) nach Anspruch 1, **dadurch gekennzeichnet, dass** der Beleuchter ein Infrarotlichtemitter ist, während die Kamera eine Infrarotlichtkamera ist; oder dass der Beleuchter ein Emitter von sichtbarem Licht ist, während die Kamera eine Kamera für sichtbares Licht ist.

3. Betriebsmodul (2) nach Anspruch 1, **dadurch gekennzeichnet, dass** das Mittel zur räumlichen Orientierung als ein Markierungspunkt zum Bereitstellen von Positionsinformationen für eine im Inneren des Fahrzeugs positionierte Kamera ausgelegt ist.

4. Betriebsmodul (2) nach einem der Ansprüche 1 bis 3, **dadurch gekennzeichnet, dass** das Betriebsmodul (2) eine berührungsempfindliche Oberfläche zum Eingeben aufweist.

5. Betriebsmodul (2) nach Anspruch 4, **dadurch gekennzeichnet, dass**, auf dem Betriebsmodul (2), eine Anzeigevorrichtung (5) bereitgestellt ist, die separat von der berührungsempfindlichen Oberfläche oder integral mit dieser angeordnet ist.

6. Betriebsmodul (2) nach einem der Ansprüche 1 bis 5, **dadurch gekennzeichnet, dass** das Betriebsmodul (2) eine Batterie aufweist, die in der Lage ist, in einem Zustand geladen zu werden, in dem das Betriebsmodul (2) mit dem Lenkrad (1) verbunden ist.

7. Betriebsmodul (2) nach einem der Ansprüche 1 bis 6, **dadurch gekennzeichnet, dass** das Betriebsmodul (2) mit einer physischen Taste versehen ist.

8. Betriebsmodul (2) nach einem der Ansprüche 1 bis 7, **dadurch gekennzeichnet, dass** das Betriebsmodul (2) mit einem Rücksetzmechanismus verbunden ist, der am Lenkrad (1) bereitgestellt ist, um auf einen Zustand zurückgesetzt zu werden, in dem es mit dem Lenkrad (1) verbunden ist.

9. Verfahren zum Betreiben in einem Fahrzeug, wobei Anweisungen und/oder Informationen unter Verwendung eines Betriebsmoduls (2) für ein Fahrzeug nach einem der Ansprüche 1 bis 8 eingegeben werden.

10. Verfahren nach Anspruch 9, **dadurch gekennzeichnet, dass**, in einem Zustand, in dem das Betriebsmodul (2) vom Lenkrad (1) gelöst ist, eine durch das Betriebsmodul (2) geleitete Fahrzeugkomponente entsprechend der Position und Richtung des Betriebsmoduls (2) innerhalb des Fahrzeugs entfernt betrieben wird.

11. Verfahren nach Anspruch 10, **dadurch gekennzeichnet, dass** ein Anzeigeinhalt der Anzeigevorrichtung (5), bereitgestellt auf dem Betriebsmodul (2), in Abhängigkeit von der durch das Betriebsmodul (2) geleiteten Fahrzeugkomponente angepasst ist.

12. Computerlesbares Speichermedium, ausführbare Anweisungen aufweisend, die, wenn sie ausgeführt werden, einen Computer auffordern, das Verfahren nach einem der Ansprüche 9 bis 11 durchzuführen.

13. Betriebssystem für ein Fahrzeug, das Folgendes umfasst:
ein Betriebsmodul (2) für ein Fahrzeug nach einem der Ansprüche 1 bis 8;
eine räumliche Orientierungsvorrichtung (18) zur Interaktion mit einem Mittel zur räumlichen Orientierung des Betriebsmoduls (2) zum Bestimmen der Position und Richtung des Betriebsmoduls (2) innerhalb des Fahrzeugs;
eine Kommunikationsvorrichtung zum Empfangen der Anweisung und/oder der Informationen, die auf dem Betriebsmodul (2) eingegeben wurden; und
eine Steuervorrichtung, die ein Steuersignal entsprechend den eingegebenen Anweisungen und/oder Informationen in Verbindung mit der Position und Richtung des Betriebsmoduls (2) innerhalb des Fahrzeugs erzeugt.

14. Betriebssystem nach Anspruch 13, **dadurch gekennzeichnet, dass** das Steuersignal bereitgestellt wird, um Fahrzeugkomponenten zu steuern.

15. Betriebssystem nach Anspruch 14, **dadurch gekennzeichnet, dass** die Fahrzeugkomponenten Folgendes umfassen: ein Head-Up-Display (12), eine AR-Windschutzscheibe, eine Armaturenbrettanzeige (11), eine Mittelkonsolenanzeige, eine Rückansichtsanzeige, einen Lautsprecher, eine Klimaanlage und/oder eine Lüftungsvorrichtung, ein Radio, eine Infotainment-Vorrichtung, eine Navigationsvorrichtung (16), eine Schiebedachvorrichtung, eine Sitzverstellungsvorrichtung, eine EPS-Vorrichtung, eine Start-Stopp-Vorrichtung, eine Parkhilfevorrichtung, eine Fahrzeugbeleuchtungsvorrichtung, eine Fahrmodusumschaltvorrichtung, eine Fensterheizungsvorrichtung, eine Rückspiegelheizungsvorrichtung und eine Rückspiegeleinstellungsvorrichtung.

## Revendications

1. Module de commande (2) pour un véhicule, dans lequel le module de commande (2) est connecté de manière amovible à un volant (1) et connecté en communication au véhicule, dans lequel le module de commande (2) est utilisé pour la saisie d'instructions et/ou d'informations, **caractérisé en ce que** le module de commande (2) est pourvu d'un moyen d'orientation spatiale pour déterminer la position et la direction du module de commande (2) à l'intérieur du véhicule ;
dans lequel le moyen d'orientation spatiale est configuré comme :
- un capteur photosensible pour recevoir une lumière laser émise par au moins deux stations de base laser positionnées à l'intérieur du véhicule, ou
- un dispositif d'éclairage pour fournir un signal optique pour une caméra positionnée à l'intérieur du véhicule.

2. Module de commande (2) selon la revendication 1, **caractérisé en ce que** le dispositif d'éclairage est un émetteur de lumière infrarouge, tandis que la caméra est une caméra à lumière infrarouge ; ou le dispositif d'éclairage est un émetteur de lumière visible, tandis que la caméra est une caméra à lumière visible.

3. Module de commande (2) selon la revendication 1, **caractérisé en ce que** le moyen d'orientation spatiale est configuré comme un point de repère pour fournir des informations de position pour une caméra positionnée à l'intérieur du véhicule.

4. Module de commande (2) selon l'une quelconque des revendications 1 à 3, **caractérisé en ce que** le module de commande (2) a une surface tactile pour la saisie.

5. Module de commande (2) selon la revendication 4, **caractérisé en ce que** sur le module de commande (2) est fourni un dispositif d'affichage (5) qui est agencé séparément de ou de manière solidaire avec la surface tactile.

6. Module de commande (2) selon l'une quelconque des revendications 1 à 5, **caractérisé en ce que** le module de commande (2) a une batterie qui peut être chargée dans un état où le module de commande (2) est connecté au volant (1).

7. Module de commande (2) selon l'une quelconque des revendications 1 à 6, **caractérisé en ce que** le module de commande (2) est pourvu d'un bouton physique.

8. Module de commande (2) selon l'une quelconque des revendications 1 à 7, **caractérisé en ce que** le module de commande (2) est connecté à un mécanisme de réinitialisation fourni sur le volant (1) de manière à être réinitialisé vers un état où il est connecté au volant (1).

9. Procédé d'utilisation dans un véhicule, dans lequel des instructions et/ou des informations sont saisies à l'aide d'un module de commande (2) pour un véhicule selon l'une quelconque des revendications 1 à 8.

10. Procédé selon la revendication 9, **caractérisé en ce que** dans un état où le module de commande (2) est déconnecté du volant (1), un composant de véhicule dirigé par le module de commande (2) est commandé à distance en fonction de la position et de la direction du module de commande (2) à l'intérieur du véhicule.

11. Procédé selon la revendication 10, **caractérisé en ce qu'**un contenu d'affichage du dispositif d'affichage (5) fourni sur le module de commande (2) est adapté en fonction du composant de véhicule dirigé par le module de commande (2).

12. Support de stockage lisible par ordinateur ayant des instructions exécutables qui, lorsqu'elles sont exécutées, poussent un ordinateur à réaliser le procédé selon l'une quelconque des revendications 9 à 11.

13. Système d'exploitation pour un véhicule, comprenant :
un module de commande (2) pour un véhicule selon l'une quelconque des revendications 1 à 8 ;
un dispositif d'orientation spatiale (18) pour interagir avec un moyen d'orientation spatiale du module de commande (2) pour déterminer la position et la direction du module de commande (2) à l'intérieur du véhicule ;
un dispositif de communication pour recevoir les instructions et/ou informations saisies sur le module de commande (2) ; et
un dispositif de commande qui génère un signal de commande en fonction des instructions et/ou informations saisies conjointement avec la position et la direction du module de commande (2) à l'intérieur du véhicule.

14. Système d'exploitation selon la revendication 13, **caractérisé en ce que** le signal de commande est fourni pour commander des composants de véhicule.

15. Système d'exploitation selon la revendication 14, **caractérisé en ce que** les composants de véhicule comprennent : un affichage tête haute (12), un pare-brise à réalité augmentée, un écran de tableau de bord (11), un écran de console centrale, un écran de recul, un haut-parleur, un dispositif de climatisation et/ou de ventilation, une radio, un dispositif d'infodivertissement, un dispositif de navigation (16), un dispositif de toit ouvrant coulissant, un dispositif de réglage de siège, un dispositif de direction assistée électrique, un dispositif d'arrêt-démarrage, un dispositif de stationnement, un dispositif d'éclairage de véhicule, un dispositif de commutation de mode de conduite, un dispositif de chauffage de vitre, un dispositif de chauffage de rétroviseur, et un dispositif de réglage de rétroviseur.
